## Europäisches Patentamt

## European Patent Office

## Office européen des brevets

(19)

(11) Veröffentlichungsnummer: **0 090 056**

**B1**

(12)

# EUROPÄISCHE PATENTSCHRIFT

(45) Veröffentlichungstag der Patentschrift:
**12.08.87**

(21) Anmeldenummer: **82102511.1**

(22) Anmeldetag: **25.03.82**

(51) Int. Cl.⁴: **G 01 D 15/08**

(54) **Verfahren und Anordnung zum Ansteuern einer Reihe von Schreibelektroden für eine Aufzeichnung von Informationen auf einem elektrosensitiven Aufzeichnungsträger.**

(43) Veröffentlichungstag der Anmeldung:
**05.10.83 Patentblatt 83/40**

(45) Bekanntmachung des Hinweises auf die Patenterteilung:
**12.08.87 Patentblatt 87/33**

(84) Benannte Vertragsstaaten:
**DE FR GB IT**

(56) Entgegenhaltungen:
**DE-B-1 148 766**
**DE-B-1 548 595**
**DE-B-1 904 599**
**DE-C-2 215 519**
**US-A-3 441 946**
**US-A-3 631 510**

(73) Patentinhaber: **IBM DEUTSCHLAND GMBH, Pascalstrasse 100, D-7000 Stuttgart 80 (DE)**

(84) Benannte Vertragsstaaten: **DE**

(73) Patentinhaber: **International Business Machines Corporation, Old Orchard Road, Armonk, N.Y. 10504 (US)**

(84) Benannte Vertragsstaaten: **FR GB IT**

(72) Erfinder: **Goldrian, Gottfried, Dipl.- Ing., Gutacher Weg 18, D-7030 Böblingen (DE)**
Erfinder: **Rudolph, Volker, Dr., Finkenweg 20, D-7031 Aidlingen 3 (DE)**
Erfinder: **Wohnsdorf, Manfred, Genkerstrasse 9, D-7030 Böblingen (DE)**

(74) Vertreter: **Blutke, Klaus, Dipl.- Ing., Schönaicher Strasse 220, D-7030 Böblingen (DE)**

EP 0 090 056 B1

LIBER, STOCKHOLM 1987

## Beschreibung

Die Erfindung betrifft ein Verfahren und eine Anordnung zum Ansteuern der Schreibelektroden eines mehrere Elektroden aufweisenden, zur Informationsaufzeichnung auf einem elektrosensitiven Aufzeichnungsträger dienenden Schreibkopfes, der sich im wesentlichen parallel zur Oberfläche des Aufzeichnungsträgers bewegt.

Solche Verfahren und Anordnungen sind in den verschiedensten Ausführungsarten seit langem bekannt.

So zeigt beispielsweise die US Patentschrift 3 631 510 eine Registriervorrichtung, bei der eine Anzahl in einer Zeile angeordneter Fingerelektroden über einen Zeichengenerator taktgesteuert erregbar sind. Die Elektroden liegen dabei fest auf dem Papier auf, während eine Gegenelektrode großflächig in einiger Entfernung von den Schreibelektroden ebenfalls auf der metallisierten Oberfläche aufliegt. Selektiv an den Elektroden zugefürte Stromimpulse bewirken ein Verdampfen des Aluminiums an der Kontaktstelle. Zur Verbesserung der Sichtbarkeit der aufgezeichneten Punkte werden zu jedem Punkt mehrere Impulse zugeführt.

Aus der US PS 3 441 946 ist eine weitere Anordnung für ein mit elektrosensitivem Papier arbeitendes Registriergerät bekannt. Die Eingangsimpulse werden in eine Anzahl kurzer Impulse umgewandelt, die nach Verstärkung der Schreibelektrode zugeführt werden, die einerseits über das Papier geführt wird, das sich außerdem noch weiter bewegt. Die Antriebsgeschwindigkeit der Schreibelektrode wird mit der Frequenz der Schreibimpulse koordiniert. D.h., die Ausgangsfrequenz eines steuernden Oszillators ann dabei entsprechend sich ändernden Bedingungn, wie z. B. einem anderen Maßstab und einer entsprechend geringeren oder höheren Geschwindigkeit des Registrierpapiers verändert werden. Damit erreicht man, daß alle auf dem Registrierpapier aufgezeichneten Punkte im wesentlichen immer vergleichbare Abstände voneinander aufweisen.

Da die Impulse bei diesen elektrosensitiven Papieren bei ausreichender Amplitude sofort zu einer guten Markierung führen, können sie relativ kurz sein. Dadurch kann der Leistungsbedarf minimal gehalten werden.

Dies sind jedoch keine Aufzeichnungsverfahren, bei denen zur Informationsaufzeichnung kein vollständiges Ausbrennen des Metallpapiers wie beim Anmeldungsgegenstand erfolgt.

Aus der DE-B-1 548 595 ist eine elektronische Schaltung für eine Registriereinrichtung eines Metallpapierschreibens mit einer Schreibeletrode bekannt, bei der ein sich entladender Kondensator einen Schreibstromimpuls erzeugt.

In der DE-B-1 148 766 ist eine Einrichtung bei Metallpapierschreibern zum Umschalten der Schreibspannung beschrieben, bei der die Schreibspannung durch vom Schreibstrom abhängige Schaltmittel bei Absinken des Übergangswiderstandes zwischen Schreibspitze und Metallpapier vergrößert wird.

Aus der DE-PS 2 215 519 sind schließlich ein Verfahren und eine Anordnung zur Aufzeichnung von Informationen nach dem Elektroerosionsverfahren auf Metallregistrierpapier als Aufzeichnungsträger mit einem eine Anzahl von Elektroden aufweisenden Druckkopf bekannt, bei welchem zur Vermeidung einer Brückenbildung zwischen den Elektroden die Einschaltdauer der den einzelnen Elektroden nacheinander zugeführten Schreibimpulse in jedem Fall kürzer gewählt wird, als die Zeit, nach der der Ausbrennvorgang von alleine beendet sein würde. Mit anderen Worten, es werden bei diesem bekannten Verfahren die Elektroden unter Strom abgeschaltet. Dazu ist es aber zwingend erforderlich, daß der eine Ausbrennvorgang beendet sein muß, bevor der nächste gezündet werden kann. Das Schalten unter Strom hat aber einmal einen verstärkten Materialverschleiß an der Elektrode und zum andern einen verstärkten Materialtransport zur Folge, wobei sich das verdampfte Metall einmal auf den Elektroden selbst niederschlägt und zum andern die sich zwischen den Elektroden ablagernden staubfeinen Abfallprodukte elektrisch leitend machen kann. D.h., hier kann eine Brückenbildung eben nicht ausgeschlossen werden. Außerdem ist die Ablagerung von Metall auf den Elektrodenspitzen insbesondere dann, wenn es sich um sehr feine dünne Elektroden handelt, außerordentlich lästig und führt bei den heute üblichen sehr dünnen Aluminiumschichten zu den sehr unerwünschten Schleifspuren. Will man eine außergewöhnlich hohe Auflösung bei der Aufzeichnung von Informationen auf einem metallisierten Aufzeichnungsträger erreichen, dann sind die bisher bekannten Verfahren und Anordnungen nicht so recht brauchbar.

Bei diesem bekannten Verfahren werden durch elktronische Schaltelemente, wie z.B. 4-Bit-Binärzähler, Demultiplexer und Elektrodentreiber-Transistoren, also sehr kurze Stromimpulse hoher Amplitude erzeugt, die zwar sofort eine Markierung hervorrufen, jedoch unverhältnismäßig große Punkte ausbrennen würden, wenn der Stromfluß durch die Elektroden nicht unterbrochen würde.

Die Anmelderin hat jedoch erkannt, daß das Abschalten der Elektroden unter Strom erhebliche Nachteile mit sich bringt.

Gemäß einem in einer gleichzeitig eingereichten Anmeldung der Anmelderin (EP-A-0 090 057) beschriebenen Vorschlag soll deshalb bei einem Verfahren der eingangs genannten Art in der Weise vorgegangen werden, daß die Amplitude und die Dauer jedes Schreibstromimpulses so gewählt werden, daß der durch den einzelnen Druckimpuls ausgelöste Schreibvorgang spätestens mit dem Ende des Druckimpulses beendet ist, ohne daß der Schreibstromimpuls durch eine Schaltmaßnahme in seiner Dauer beeinflußt wird.

Wenn jedoch der Druckkopf eine größere Anzahl von in einer Reihe oder in mehreren Reihen angeordneten Schreibelektroden enthält, kann dann, wenn eine Anzahl von Elektroden gleichzeitig betätigt wird, am Kontaktwiderstand zum Aluminiumüberzug des Aufzeichnungsträgers ein so hoher Spannungsabfall auftreten, daß die durch die einzelnen Elektroden bewirkte Elektroerosion stark gestört wird, so daß sich eine Menge Leerstellen bilden kann. Dieser Spannungsabfall kann klein gehalten werden, wenn jeweils nur wenige Elektroden gleichzeitig gezündet werden.

Die der vorliegenden Erfindung zugrundeliegende Aufgabe besteht nun darin, ein Verfahren und eine Anordung der eingangs genannten Art anzugeben, durch die die Elektroden angesteuert werden können, ohne daß es zu einer Ackumulierung der Widerstände und Spannungsabfälle an den einzelnen Elektroden kommt.

Dies wird erfindungsgemäß durch die im kennzeichnenden Teil des Anspruchs 1 bzw. 2 angegebenen Maßnahmen erreicht.

Eine vorteilhafte Weiterbildung der Anordnung gemäß der Erfindung ist Anrpruch 3 zu enthehmen.

Die Erfindung wird anhand eines Ausführungsbeispiels in Verbindung mit den beigefügten Zeichnungen im einzelnen erläutert.

In den Zeichnungen zeigt:

Fig. 1 eine Anzahl gestaffelter Druckimpulse gemäß der Erfindung und

Fig. 2 schematisch eine Schaltungsanordnung zur Erzeugung von gestaffelten Schreibstromimpulsen.

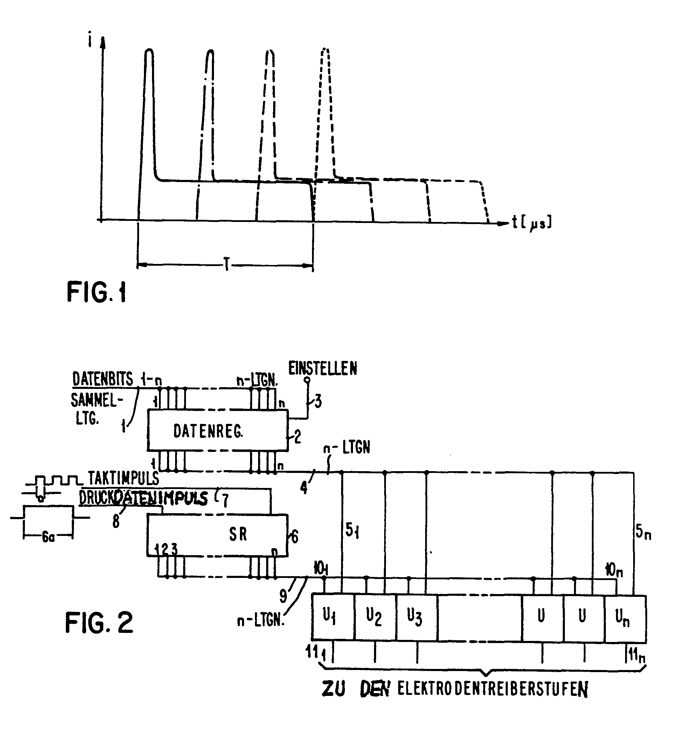

In Fig. 1 erkennt man zunächst einige Schreibstromimpulse. Man sieht, daß jeder Schreibstromimpuls aus einem sehr kurzen steil ansteigenden und steil abfallenden Abschnitt relativ hoher Amplitude und einem wesentlich längerem Abschnitt wesentlich geringerer Amplitude besteht. Alle diese Schreibstromimpulse sind gleich lang und gleichartig aufgebaut. Der erste Abschnitt mit relativ hoher Amplitude und sehr kurzer Dauer ist der sog. Zündimpuls, d.h., dieser Impuls bewirkt an der Schreibelektrode, die auf der Oberfläche eines mit einem metallischen Überzug versehenen Aufzeichnungsträgers (Metallpapier) aufliegt, das Entstehen eines punktförmigen Loches und Zünden eines Lichtbogens. Wenn der Lichtbogen einmal gezündet hat, dann kann die Stromstärke dieses Impulses drastisch verringert werden auf einen zweiten relativ niedrigeren Wert, der gerade noch ausreicht, den Lichtbogen für eine kurze Zeitdauer am Brennen zu halten. Durch die Auswahl der Amplituden der beiden Abschnitte eines Schreibstromimpulses läßt sich also die Zeitspanne, in der der Ausbrennvorgang unterhalb der Schreibelektrode auf natürliche Weise beendet wird, in Grenzen einstellbar machen. Diese Impulsform hat aber noch eine ganze Reiche von weiteren Vorteilen. Wie bereits in der Beschreibungseinleitung ausgeführt, ist es bei gleichförmig hohen Schreibstromimpulsen praktisch nicht möglich, diese Schreibstromimpulse schneller aufeinanderfolgen zu lassen, da dies zu Brückenbildung zwischen den Elektroden führen könnte und außerdem weitere Nachteile aufweist. Insbesondere müssen Schreibstromimpulse mit derartig hohen Stromamplituden, wenn mit hoher Auflösung geschrieben werden soll, unbedingt nach ganz kurzer Zeit unter Strom abgeschaltet werden. Die in Fig. 1 beschriebene Impulsform erlaubt es jedoch, die Impulslänge, die sich im wesentlichen aus der Dauer des Ausbrennimpulses, der auf den Zündimpuls folgt, ergibt, so einzustellen, daß mit hoher Auflösung gearbeitet werden kann.

Wenn man nunmehr aber die Schreibstromimpulse schneller aufeinander folgen lassen möchte, so ist dies mit der in Fig. 1 beschriebenen Impulsform möglich. Wenn man beispielsweise die Dauer eines jeden Schreibstromimpulses zu T wählt, dann kann man, ganz allgemein gesagt, bereits nach $\frac{1}{m}$ T, beispielsweise nach 1/3 T, den nächsten Schreibstromimpuls und beispielsweise nach $\frac{2}{m}$ T oder im vorliegenden Beispiel nach 2/3 T den übernächsten Schreibstromimpuls einleiten. Man sieht sofort, daß die einzelnen Zündimpulse einen recht großen Abstand voneinander aufweisen und so die Gefahr einer Brückenbildung einwandfrei beseitigt ist. Diese Anordnung hat aber noch den weiteren sehr großen Vorteil, daß die Belastung der Stromversorgungsschaltung des gesamten Gerätes gleichmäßiger wird, insbesondere aber, daß sich die bei hohen Stromstärken der Zündimpulse auftretenden Spannungsabfälle nicht mehr addieren. Durch diese überlappende Ansteuerung der einzelnen Schreibelektroden wird also eine wesentlich bessere Auslastung des Stromversorgungsteils gewährleistet oder mit anderen Worten, der Stromversorgungteil kann für eine wesentlich kleinere Dauerleistung ausgelegt werden.

In Fig. 2 ist rein schematisch eine Anordnung zur Erzeugung von gestaffelten oder sich überlappenden Schreibstromimpulsen dargestellt. Über eine n-adrige Sammelleitung 1 kommen die Datenbits 1 bis n an und werden einem Datenregister 2 an n Eingängen zugeführt.

Ein Einstelleingang 3 dient der Einstellung des Datenregisters. Weiterhin ist ein Schieberegister 6 vorgesehen, dem Taktimpulse über eine Taktimpulsleitung 7 am Takteingang zugeführt werden. Außerdem gelangen die Druckimpulse über eine Eingangsleitung 8 an das Schieberegister 6. Dieses Schieberegister besitzt n Stufen mit n Ausgangsleitungen, die als Sammelleitung 9 an einer Gruppe von parallel liegenden UND-Gliedern $U_1$ bis $U_n$ angeschlossen sind.

Diese UND-Glieder weisen Ausgangsleitungen $11_1$ bis $11_n$ auf, die zu den Elektrodentreiberstufen fuhren. Um die Arbeitsweise dieser Schaltungsanordnung an einem Beispiel zu erläutern, sei angenommen, daß die Taktimpulse einen Abstand von a, z. B. 0,5 µs, aufweisen, während der dem Schieberegister 6 zugeführte Druckimpuls eine Länge von 6a aufweist. Die zur Ansteuerung der Elektrodentreiberstufen über n Leitungsadern der Sammelleitung 1 ankommenden Daten werden parallel in das Datenregister eingespeist und gehen über die n Adern der Sammelleitung 4 über Leitungen $5_1$ bis $5_n$ an die ersten Eingänge der UND-Glieder $U_1$ bis $U_n$. Dadurch werden für die einzelnen Datenbits die UND-Glieder entsperrt. Der in das Schieberegister 6 über Leitung 8 einlaufende Druckimpuls wird im Schieberegister durch die Taktimpulse weitergeschoben. Dies hat zur Folge, daß jedes UND-Glied in der Weise für die Dauer eines Druckimpulses entsperrt wird, daß in dem angenommenen Beispiel zu einem Zeitpunkt 2a nach dem Durchschalten des UND-Gliedes $U_1$ das UND-Glied $U_2$ durchgeschaltet wird. Ebenso wird zu einem Zeitpunkt 2a nach dem Durchschalten des UND-Gliedes $U_2$ das UND-Glied $U_3$ durchgeschaltet usw. Wenn das hier nicht dargestellte UND-Glied $U_4$ durch den nächsten, aus dem Schieberegister 6 herauskommenden Druckimpuls, durchgeschaltet wird, wird as UND-Glied $U_1$ gleichzeitig gesperrt. Man sieht also, daß sich die Druckimpulse und damit auch die Schreibstromimpulse in der in Fig. 1 dargestellten Weise überlappen. Ganz allgemein gesagt hat das Schieberegister dabei mindestens n Stufen, vorzugsweise aber 2n oder xn Stufen, aber in jedem Fall nur n Ausgänge. Die Ausgänge können dann so gelegt werden, daß am Ausgang 1 für z. B. 6 Taktperioden a ein Ausgangssignal ansteht. Es könnte aber der erste Ausgang auch so gelegt werden, daß für 5 oder 7 oder gar 8 Taktperioden a ein Ausgangssignal erzeugt wird. Das am Ausgang 2 auftretende Ausgangssignal würde bei einer Dauer des Druckimpulses von 6 Taktperioden mit dem 3. Taktimpuls beginnen und mit dem 8. Taktimpuls enden usw. D.h. bei Zeiteinheiten von 0,5 µs je Taktimpuls könnten durch eine entsprechend kurze Unterteilung des Schieberegisters Druckimpulse von 2,5 µs, 3 µs, 3,5 µs, oder 4 µs erzeugt werden. Damit kann man aber die Auflösung des Druckes variieren. Dabei besteht gemäß Fig. 1 jeder Schreibstromimpuls, wie bereits näher erläutert, aus einem relativ kurzen Abschnitt mit hoher Amplitude und einem relativ langem Abschnitt mit relativ geringer Stromamplitude.

Man sieht also, daß durch die Erfindung eine völlig neuartige Ansteuerung für die Elektrodentreiberstufen eines Elektroerosionsdruckers geschaffen wurde, durch die die Zündimpulse wesentlich näher aneinandergerückt werden können. Außerdem wird durch die Form und die überlappende Anordnung der Schreibstromimpulse eine Brückenbildung mit Sicherheit vermieden. Ferner wird durch die Form der Schreibstromimpulse einerseits eine sichere Zündung des zum Ausbrennen erforderlichen Lichtbogens erreicht, wobei dann der eigentliche Ausbrennvorgang bei der geringst möglichen Stromstärke ablaufen kann. Schließlich läßt sich durch die Erfindung eine im wesentlichen gleichmäßige Belastung der Stromversorgung eines Elektroerosionsdruckers auch dann erreichen, wenn eine größere Anzahl von Schreibelektroden in sehr kurzer Zeit nacheinander betätigt werden. In diesem Zusammenhang sei noch kurz darauf hingewiesen, daß man es hier mit einem dynamischen Schreibvorgang zu tun hat. Der Grund für die auf einanderfolgende Betätigung der Elektroden liegt nämlich darin, daß eine gleichzeitige Betätigung, wie eingangs erläutert, nicht möglich ist. Wenn man aber die einzelnen Schreibelektroden zeitlich gegeneinander gestaffelt ansteuert, so erhält man einen Ausrichtfehler, den man mechanisch kompensieren kann.

Wird nämlich eine Schreibelektrode zeitlich verzögert angesteuert mit der Zeitdifferenz $\Delta t$, so legt sie relativ zu dem Aufzeichnungsträger den Wert $\Delta_s$ bei einer Geschwindigkeit $v = \Delta_s/\Delta_t$ zurück. Die Teilung der Schreibelektroden auf dem Schreibkopf wird dann um $-\Delta_s = \Delta_t \cdot v$ korrigiert, so daß jede Schreibelektrode wieder an ihrer Sollwertkoordinate druckt. Man erreicht also damit ein quasi-gleichzeitiges Drucken und man kompensiert damit nicht nur den durch das Papier verursachten Spannungsabfall, sondern auch die Kumulierung der Spannungsabfälle an den einzelnen Elektroden, die bei gleichzeitiger Betätigung sich einander überlagern würden. Damit werden aber die Toleranzen von diesen Parametern unabhängig, d.h., die durch diese Effekte verursachten Schwankungen im Druckpunktdurchmesser werden kompensiert, und die Anzahl der Leerstellen als Funktion des Schwärzungsgrades (Anzahl der gleichzeitig betätigten Schreibelektroden) und die Schwankungen der Spannungsabfälle am Papier werden korrigiert. Man erreicht damit eine wesentlich höhere Druckqualität, und die Anforderungen an die Qualität des Aufzeichnungsträgers, des mit einem Aluminiumüberzug versehenen Papiers, können etwas verringert werden.

**Patentansprüche**

1. Verfahren zum Ansteuern der Schreibelektroden eines mehrere Elektroden aufweisenden, zur Informationsaufzeichung auf einem elektrosensitiven Aufzeichnungsträger dienenden Schreibkopfes, der sich im wesentlichen parallel zur Oberfläche des Aufzeichnungsträgers bewegt,
dadurch gekennzeichnet,
daß bei Aktivierung durch einen Druckdatenimpuls eine Elektrode mit einem Schreibstromimpuls, bestehend aus einem kurzzeitigen Zündimpuls hoher Amplitude und einem selbstlöschenden Brennimpuls niedrigerer Amplitude welcher wesentlich länger als der Zündimpuls ist, beaufschlagt wird und

daß bei einer Aktivierung mehrerer Elektroden jede dieser Elektroden mit einem zeitlich versetzten Schreibstromimpuls derart beaufschlagt wird, daß sich der Zündimpuls eines Schreibstromimpulses nur mit dem jeweiligen Brennimpuls vorgehender Schreibstromimpulse zeitlich überlagert.

2. Anordnung zur Durchführung eines Verfahrens nach Anspruch 1, mit einem mehrere Schreibelektroden aufweisenden, zur Infrmationsaufzeichnung auf einem elektrosensitiven Aufzeichnungsträger dienenden Schreibkopf, der sich im wsentlichen parallel zur Oberfläche des Aufzeichnungsträgers bewegt, gekennzeichnet

durch ein Datenregister (2), dem die der Ansteuerung dienenden n Datenbits über eine Datensammelleitung (1) zugeführt werden, ferner durch ein mindestens n-stufiges Schieberegister (SR; 6), dem eingangsseitig Taktimpulse über eine Taktimpulsleitung (7) und Druckdatenimpulse über eine Leitung (8) zuführbar sind,

und dadurch gekennzeichnet daß das Schieberegister n Ausgänge aufweist und daß die n Ausgangsleitungen $(4; 5_1 ... 5_n)$ des Datenregisters und die n Ausgangsleitungen $(9; 10_1$ bis $10_n)$ des Schieberegisters jeweils paarweise mit den Eingängen von n UND-Gliedern verbunden sind, an deren Ausgangleitungen $(11_1$ bis $11_n)$ Elektrodentreiberstufen angeschlossen sind.

3. Anordnung nach Anspruch 2, dadurch gekennzeichnet,

daß das Schieberegister x . n Stufen enthält, daß die Taktimpulsfrequenz x mal größer ist als bei Verwendung von n Stufen und

daß zur Erzeugung der auftretenden Schreibstromimpulse an den n Ausgängen der UND-Glieder $(U_1$ bis $U_n)$ nur an jedem x-ten Ausgang des Schieberegisters (6) eine Ausgangsleitung angeschlossen ist.

### Claims

1. Method of controlling the print electrodes of a print head comprising several electrodes and serving to record information on an electrosensitive record carrier, said print head moving substantially parallel to the surface of the record carrier, characterized in that upon being activated by a print data pulse, an electrode receives a print current pulse consisting of a firing pulse of short duration and high amplitude and a self-extinguishing burn-out pulse of low amplitude and substantially longer duration than the firing pulse, and that upon activation of several electrodes, a time-staggered print current pulse is applied to each electrode such that the firing pulse of a print current pulse is overlapped in time only by the respective burn-out pulse of preceding print current pulses.

2. Arrangement for implementing a method according to claim 1, with a print head comprising several electrodes and serving to record information on an electrosensitive record carrier, said print head moving substantially parallel to the surface of the record carrier, characterized by a data register (2) to which n data bits used for control are applied by a data bus (1), furthermore by an at least n-stage shift register (SR; 6), to the input side of which clock pulses are applied by a clock pulse line (7) and print data pulses by a line (8), and characterized in that the shift register has n outputs, and that the n output lines $(4; 5_1 ... 5_n)$ of the data register and the n output lines $(9; 10_1$ to $10_n)$ of the shift register are connected in pairs to the inputs of n AND gates, to the output lines $(11_1$ to $11_n$ of which electrode driver stages are connected.

3. Arrangement according to claim 2, characterized in that the shift register comprises x . n stages, that the clock pulse frequency is x times higher than with n stages, and that for generating the print current pulses on the n outputs of the AND gates $(U_1$ to $U_n)$, only one output line is connected to every xth output of the shift register (6).

### Revendications

1. Procédé pour commander des électrodes d'enregistrement d'une tête comportant plusieurs électrodes et utilisée pour enregistrer des informations sur un support d'enregistrement électrosensible, et qui se déplace essentiellement parallèlement à la surface du support d'enregistrement, caractérisé en ce que, lors de son activation par une impulsion de donnée d'impression, une électrode est chargée par une impulsion de courant d'enregistrement, constituée par une impulsion d'amorçage de brève durée et d'amplitude élevée et par une impulsion de brûlage d'amplitude plus faible, qui se coupe automatiquement et est nettement plus longue que l'impulsion d'amorçage, et que, lors d'une activation de plusieurs électrodes, chacune de ses électrodes est chargée par une impulsion de courant d'enregistrement décalée dans le temps, de telle sorte que l'impulsion d'ammorçage d'une impulsion de courant d'enregistrement se superpose dans le temps uniquement à l'impulsion respective de brûlage de l'impulsion de courant d'enregistrement précédente.

2. Dispositif pour la mise en oeuvre du procédé selon la revendication 1, comprenant une tête d'enregistrement comportant plusieurs électrodes d'enregistrement et servant à réaliser l'enregistrement d'informations sur un support d'enregistrement électrosensible et qui se déplace essentiellement parallèlement à la surface du support d'enregistrement, caractérisé par un registre de données (2), auquel les n bits de données utilisés pour la commande sont envoyés par l'intermédiaire d'un bus (1) de transmission dde données, et en outre par au moins un registre à décalage à n étages (SR; 6), au côté entrée duquel des impulsions de cadence peuvent être envoyées par l'intermédiaire d'une ligne (7) de transmission d'impulsions de cadence et des impulsions de données d'impression peuvent être envoyées par l'intermédiaire d'une ligne (8), et caractérisé en ce que le registre à décalage comporte n sorties et que les n lignes de sortie (4; $5_1$,...$5_n$) du registre de données et les n lignes de sortie (9; $10_1$ à $10_n$) du registre à décalage sont reliées respectivement par couples aux entrées de n circuits ET, aux lignes de sortie ($11_1$ à $11_n$) desquels sont raccordés les étages d'attaque des électrodes.

3. Dispositif selon la revendication 2, caractérisé en ce que le registre à décalage contient x . n étages, que la fréquence des impulsions de cadence est x fois plus élevée que dans le cas de l'utilisation de n étages et que, pour la production des impulsions apparaissantes de courant d'enregistrement sur les n sorties des circuits ET ($U_1$ à $U_n$), une ligne de sortie est raccordée uniquement à chaque x-ème sortie du registre à décalage (6).

FIG. 1

FIG. 2

ZU DEN ELEKTRODENTREIBERSTUFEN